# FASCICULE DE BREVET EUROPEEN

(11) **EP 3 728 691 B1**
(45) Date de publication et mention de la délivrance du brevet: **19.02.2025**
(21) Numéro de dépôt: 18833960.0
(22) Date de dépôt: 18.12.2018
(51) Int. Cl.: G01M 17/02, G01N 19/04, G01N 19/02

(54) **SOL ET DISPOSITIF ET PROCÉDÉS ASSOCIES**
BODENBELAG UND VORRICHTUNG SOWIE DAMIT VERBUNDENE VERFAHREN
FLOORING AND DEVICE AND METHODS ASSOCIATED WITH SAME

(30) Priorité: 18.12.2017 FR 1762352
(43) Date de publication de la demande: 28.10.2020
(73) Titulaire: COMPAGNIE GENERALE DES ETABLISSEMENTS MICHELIN, 63000 Clermont-Ferrand (FR)
(72) Inventeur: GUILLOU, Melaine, 63040 CLERMONT FERRAND CEDEX 9 (FR); BREMOND, Florian, 63040 CLERMONT FERRAND CEDEX 9 (FR); GAUCERAND, André-Clément, 63040 CLERMONT FERRAND CEDEX 9 (FR)
(74) Mandataire: M.F.P. Michelin
(86) Numéro de dépôt international: PCT/FR2018/053357
(87) Numéro de publication internationale: WO 2019/122673

(56) Documents cités:
- WO-A1-2007/085494
- US-A1- 2006 134 424
- US-A1- 2006 169 034
- US-B2- 8 800 358
- ORSI A. ET AL: "An investigation of the typical corrosion parameters used to test polymer electrolyte fuel cell bipolar plate coatings, with titanium nitride coated stainless steel as a case study", JOURNAL OF POWER SOURCES, vol. 285, 20 March 2015 (2015-03-20), AMSTERDAM, NL, pages 530 - 537, XP093083057, ISSN: 0378-7753, DOI: 10.1016/j.jpowsour.2015.03.111
- JAGIELSKI JACEK ET AL: "Effect of chromium nitride coating on the corrosion and wear resistance of stainless steel", APPLIED SURFACE SCIENCE, vol. 156, no. 1-4, 28 February 2000 (2000-02-28), Amsterdam , NL, pages 47 - 64, XP093083172, ISSN: 0169-4332, DOI: 10.1016/S0169-4332(99)00350-5
- "CHARACTERISTICS OF KYOCERA TECHNICAL CERAMICS", 1 June 2004 (2004-06-01), XP055149244, Retrieved from the Internet <URL:http://americas.kyocera.com/kicc/pdf/Kyocera_Material_Characteristics.pdf> [retrieved on 20141028]

## Description

### Domaine de l'invention

L'invention concerne un sol, en particulier un sol de test, et un procédé de fabrication associé. L'invention concerne également un dispositif, en particulier un dispositif de test, et un procédé associé.

### Etat de l'art

Des sols, en particulier des sols routiers, sont utilisés pour concevoir et tester de nouveaux matériaux et produits destinés à être utilisés sur des sols, par exemple en vue de fabriquer des éléments de pneus.

Ainsi, au cours de la conception d'une partie d'un pneu, par exemple d'un matériau pour une bande de roulement d'un pneu, la caractérisation de son comportement sous sollicitation, par exemple sous couple moteur ou freineur ou sous dérive ou sous différentiel de glissement sol/pneu, est importante.

Des tests sur des pistes externes, par exemple sur piste de freinage, sont relativement coûteux, longs et rendent difficilement compte de l'usure du pneu sur le long terme.

Dans cette optique, des mesures peuvent viser à reproduire en laboratoire, sur un tribomètre, le frottement entre la partie de pneu, par exemple constituée de gomme, et le sol routier, responsable d'une grande partie de l'effort généré dans l'aire de contact du pneu avec le sol routier.

Or les sols connus ne permettent pas en laboratoire d'effectuer des mesures représentatives d'un comportement sur un sol routier.

En effet, on constate que les coefficients d'adhérence mesurés sur des dispositifs de test en laboratoire tels que des tribomètres sont sensiblement plus faibles que ceux sur des sols routiers, typiquement d'un facteur deux.

US 8 800 358 B2 divulgue un dispositif de test de pneu.

### Résumé de l'invention

Un but de l'invention est de fournir un sol permettant de pallier ces inconvénients. Un but de l'invention est de fournir un sol pour des tests en laboratoire qui soit en mesure de représenter les caractéristiques d'un sol routier et qui soit suffisamment robuste pour un usage répété.

A cet effet, il est prévu un sol selon la revendication 1.

Il est ainsi possible d'obtenir un sol qui a les caractéristiques souhaitées, par exemple celles d'un sol routier, et qui peut être testé de manière répétée tout en conservant ses caractéristiques de frottement malgré un tel usage répété, ce qui permet d'assurer la pertinence des tests effectués.

L'invention concerne également un dispositif de test d'un élément, comprenant :
- un tel sol, et
- des moyens d'application de l'élément sur le sol et de mise en mouvement relatif de l'élément et du sol.

L'invention est avantageusement complétée par les caractéristiques suivantes, prises seules ou en une quelconque de leurs combinaisons techniquement possibles :
- le dispositif est une rouleuse,
- le dispositif est un tribomètre.

L'invention concerne en outre un procédé de fabrication d'un tel sol selon la revendication 8.

L'invention est avantageusement complétée par les caractéristiques suivantes, prises seules ou en une quelconque de leurs combinaisons techniquement possibles :
- une étape de génération d'un relief du substrat,
- une étape de génération d'un relief du substrat par fabrication additive, par exemple en céramique,
- une étape de génération du relief par usinage, par exemple par usinage laser,
- l'usinage laser est un usinage laser d'un massif comprenant du carbure de tungstène,
- l'usinage laser est un usinage laser d'un massif comprenant de l'acier inoxydable,
- une étape de génération du relief par fusion de surface par laser à partir d'une poudre d'acier inoxydable,
- l'étape d'obtention du substrat comprend en outre une étape de modulation du relief généré.

L'invention concerne en outre un procédé de test d'un élément au moyen d'un tel dispositif, comprenant l'application de l'élément sur le sol et/ou la mise en mouvement relatif de l'élément par rapport au sol.

### Brève description des figures

D'autres caractéristiques et avantages de l'invention apparaitront lors de la description ci-après de modes de réalisation. Aux dessins annexés :
- les figures 1a et 1b représentent des sols, la figure 1a représentant un exemple qui ne fait pas partie de l'invention revendiquée.
- la figure 2 représente un procédé de fabrication selon un exemple de mode de réalisation de l'invention,
- la figure 3 représente un dispositif selon un exemple de mode de réalisation de l'invention, et
- la figure 4 représente un procédé de test selon un exemple de mode de réalisation de l'invention,
- la figure 5a représente un sol de référence selon un exemple de mode de réalisation de l'invention,
- la figure 5b représente un relief du sol de référence traité selon un exemple de mode de réalisation de l'invention, et
- la figure 5c représente le relief du sol de référence de la figure 5b converti selon un exemple de mode de réalisation de l'invention,
- la figure 6 représente des mesures de coefficient de frottement en fonction de la longueur cinématique selon un exemple de mode de réalisation de l'invention.

### Description détaillée de l'invention

### Procédé de fabrication

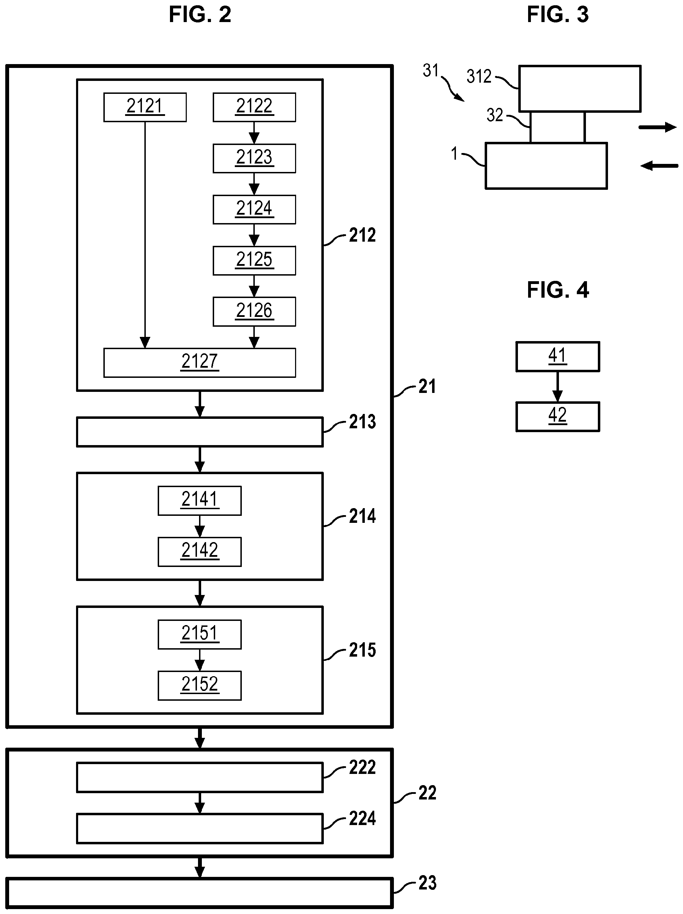

En référence à la figure 2, il est décrit un procédé de fabrication d'un sol, par exemple d'un sol tel que décrit ci-après.

### Génération d'un substrat

Le procédé comprend une étape 21 d'obtention d'un substrat 110, par exemple d'un substrat 110 tel que décrit ci-après. L'étape d'obtention du substrat 110 peut être une étape de génération du substrat 110 ou de fourniture du substrat 110.

L'étape 21 peut comprendre une étape 212 de détermination d'un relief à reproduire. Le relief peut être défini comme une texture non plane, par exemple comme des variations d'altitude, par exemple par rapport à un plan médian. Le relief à reproduire peut être un macro-relief. Le macro-relief peut être défini vis-à-vis d'un micro-relief. Alternativement ou en complément, le macro-relief peut être défini comme le relief mesurable avec la précision d'une mesure de profondeur moyenne de texture, par exemple telle que décrite ci-après. Le macro-relief peut correspondre à un relief de taille caractéristique de l'ordre du centimètre, par exemple centimétrique.

Il est ainsi possible de connaître le relief que l'on souhaite obtenir pour le sol.

L'étape 212 peut comprendre une étape 2121 d'obtention de données relatives à un relief à reproduire, par exemple par des moyens de traitement de données, par exemple par une unité de traitement de données, par exemple par un processeur. Les données relatives à un relief à reproduire peuvent ainsi être stockées au préalable, par exemple par des moyens de stockage, par exemple par une unité de stockage, par exemple par une mémoire. Les données relatives à un relief à reproduire sont ainsi disponibles sans nécessité d'effectuer de mesure supplémentaire au préalable.

Alternativement ou en complément, l'étape 212 peut comprendre une étape 2122 d'obtention d'un sol de référence. L'étape 2122 d'obtention d'un sol de référence peut être une étape de fabrication d'un sol de référence.

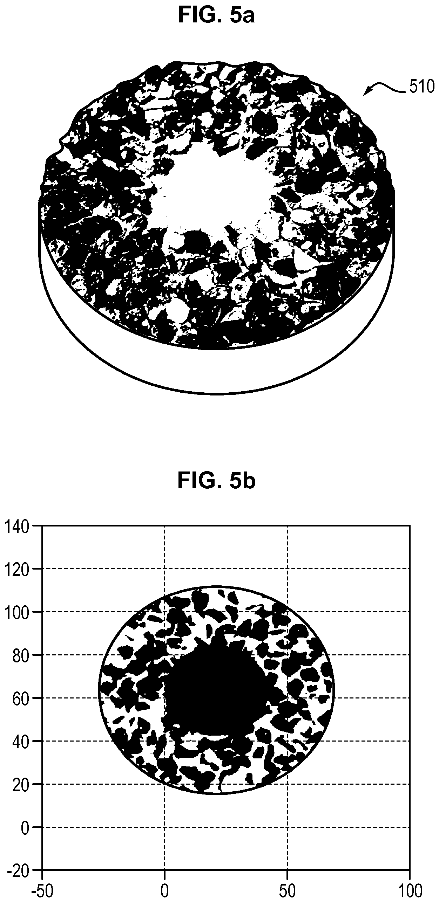

En référence à la figure 5a, il est décrit un sol de référence. Le sol de référence peut comprendre des granulats. Les granulats peuvent être des granulats de roches naturelles concassées et/ou de calibre d'environ 1 cm. Une telle structure de sol de référence présente une bonne résistance au polissage et une forte agressivité des petites échelles de par son relief, bien-au-delà des caractéristiques que pourrait présenter la roche naturelle.

Le sol de référence peut être un carottage de route. La route peut être un sol routier, par exemple un sol routier externe. Le sol routier peut comprendre du béton et/ou du bitume et/ou des roches naturelles concassées. L'étape 2122 peut ainsi comprendre un carottage de route. Le carottage de route peut comprendre un prélèvement du sol routier. Le sol de référence est par exemple un sol de type mosaïque, c'est-à-dire qu'il comprend une au moins une partie où les granulats sont disposés de manière adjacente les uns aux autres, un tel sol étant particulièrement adapté pour une utilisation avec un tribomètre.

Le sol de référence peut ainsi fournir un modèle de relief que l'on souhaite reproduire pour le sol.

Le sol de référence peut comprendre une couronne 510 texturée. La couronne 510 peut comprendre le relief à reproduire. La couronne 510 peut être disposée et/ou peut s'étendre entre un rayon de 21 mm et un rayon de 48 mm. De telles dimensions peuvent être adaptées aux tailles d'éprouvettes de tribomètre pour de telles applications. Le tribomètre peut être un tribomètre permettant une cinématique en rotation ou un tribomètre linéaire.

L'étape 212 peut comprendre une étape 2123 de mesure d'un relief du sol de référence, par exemple du relief à reproduire. Il est ainsi possible d'obtenir une image de la surface du sol de référence. L'étape 2123 peut être réalisée par un profilomètre, par exemple un profilomètre optique, par exemple par projection de lumière structurée et/ou par mesure interférométrique et/ou par mesure confocale. Le profilomètre peut comprendre un capteur ayant une taille de champ de l'ordre de 10x10 cm, par exemple un capteur ayant une résolution de 100 µm. Le profilomètre est par exemple un profilomètre de modèle µsurf expert tel que commercialisé par nanofocus. Ainsi à l'issue de l'étape 2123, un relief du sol de référence mesuré peut être obtenu, par exemple sous la forme de données correspondant à la mesure du relief du sol de référence effectué.

L'étape 212 peut comprendre une étape 2124 de traitement de données du relief du sol de référence mesuré à l'étape 2123. L'étape 2124 peut comprendre une recombinaison du relief du sol de référence mesuré à l'étape 2123. L'étape 2124 peut comprendre un filtrage du relief du sol de référence mesuré à l'étape 2123, par exemple un filtrage passe-bas, par exemple un filtrage passe-bas avec une longueur d'onde de coupure de 300 µm, par exemple un filtrage spatial à support glissant, par exemple un filtrage spatial à support glissant de taille de support 300 µm. L'étape 2124 peut comprendre un redressement du relief du sol de référence mesuré à l'étape 2123, par exemple une rotation d'un plan du relief, par exemple d'un plan moyen, le plan moyen pouvant être un plan moyen des sommets du relief, par exemple obtenu par régression linéaire. L'étape 2124 peut être mise en œuvre par les moyens de traitement de données. Ainsi à l'issue de l'étape 2124, un relief du sol de référence traité est obtenu, par exemple sous la forme de données correspondant à la mesure du relief du sol de référence effectué après le traitement de données. Le procédé peut comprendre l'affichage et/ou la représentation du relief du sol de référence traité, par exemple sur un terminal. Un exemple de relief du sol de référence traité correspondant à une surface, obtenu à l'étape 2124, est illustré par la figure 5b.

Il est par exemple ainsi possible d'obtenir la profilométrie que l'on cherche à reproduire pour le sol.

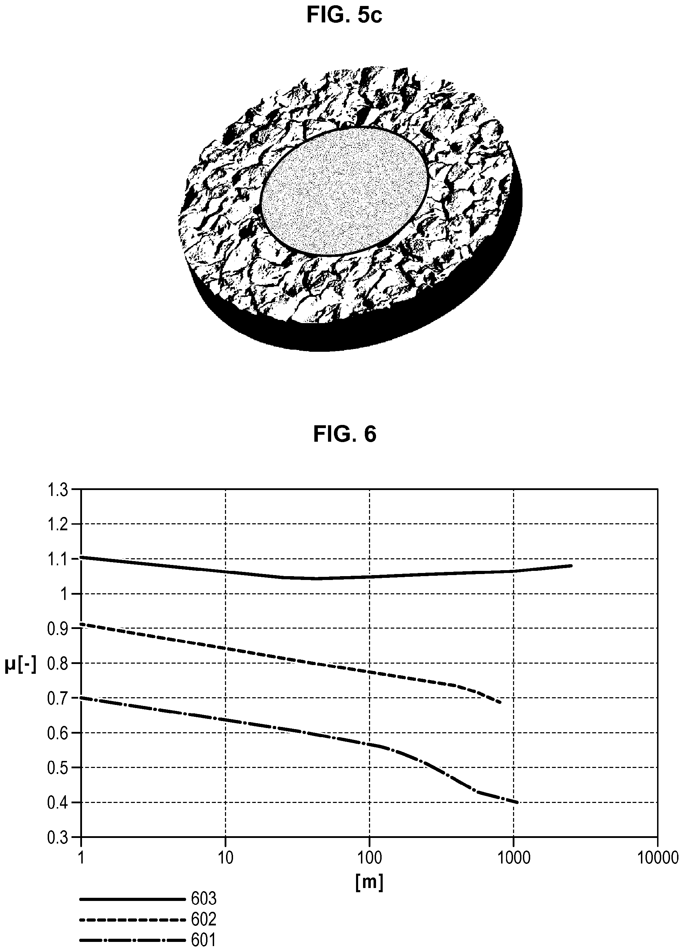

L'étape 212 peut comprendre une étape 2125 de conversion en solide du relief du sol de référence, par exemple mesuré à l'étape 2123 et/ou traité à l'étape 2124. L'étape 2125 peut comprendre la transformation du relief du sol de référence d'une représentation en deux dimensions à une représentation en trois dimensions, par exemple une transformation en un fichier en trois dimensions. L'étape 2125 peut être mise en œuvre par les moyens de traitement de données. Ainsi, à l'issue de l'étape 2125, un relief du sol de référence converti est obtenu, par exemple sous la forme de données correspondant à la mesure du relief du sol de référence effectuée, éventuellement après le traitement de données, et après la conversion. Le procédé peut comprendre l'affichage et/ou la représentation du relief du sol de référence converti, par exemple sur un terminal. Un exemple de relief du sol de référence converti de sorte à correspondre à un solide, obtenu à l'étape 2125, est illustré par la figure 5c.

Des données ainsi obtenues peuvent former un ensemble d'instructions à fournir à un dispositif d'obtention et/ou de fabrication, par exemple une machine d'usinage, pour la réalisation du sol, en particulier du substrat et/ou relief.

L'étape 212 peut comprendre une étape 2126 d'enregistrement du relief du sol de référence, par exemple mesuré à l'étape 2123 et/ou traité à l'étape 2124 et/ou converti en solide à l'étape 2125. L'enregistrement peut être réalisé sur les moyens de stockage, par exemple au moyen des moyens de traitement de données.

L'étape 212 peut comprendre une étape 2127 de fabrication d'un prototype à partir de l'enregistrement réalisé à l'étape 2126 et/ou des données obtenues à l'étape 2121. La fabrication peut être réalisée par impression 3D. Le prototype peut être en résine. Il est ainsi possible de valider le relief obtenu via l'étape 212.

L'étape 21 peut comprendre une étape 213 de génération d'un relief du substrat 110, par exemple d'un premier relief du substrat, par exemple du macro-relief. Le relief du substrat peut être généré selon le relief à reproduire, déterminé à l'étape 212, par exemple enregistré à l'étape 2126.

Le relief peut être généré à l'étape 213 par enlèvement de matière, par exemple par une technique ablative.

Le relief peut être généré par usinage.

Le relief peut être généré par laser, par exemple par usinage laser. Le relief peut être réalisé par usinage laser, par exemple par usinage laser continu ou impulsionnel, par exemple par usinage laser nano-seconde, par exemple avec un diamètre de faisceau focalisé sur la surface compris entre 10 et 100 µm, par exemple entre 25 et 35 µm, par exemple de l'ordre de 30 µm. Le relief peut être réalisé par usinage laser d'une pièce, en particulier d'un massif.

La pièce peut être une pièce métallique, en particulier un massif métallique, par exemple comprenant un acier, par exemple un acier inoxydable, par exemple un acier inoxydable X4CrNiMoN21-9-4. Le massif métallique peut être un massif en acier, par exemple en acier inoxydable, par exemple en acier inoxydable X4CrNiMoN21-9-4.

La pièce peut comprendre un carbure, par exemple d'un carbure de tungstène. La pièce peut être un massif en carbure, par exemple en carbure de tungstène.

La pièce peut avoir des dimensions générales de l'ordre de celles de la pièce finale, et/ou peut être lisse, et/ou peut avoir une épaisseur supérieure d'au moins un ordre de grandeur supérieur à la profondeur de texture visée, par exemple d'environ un ordre de grandeur.

Un tel usinage permet ainsi de former le relief par ablation de matière. Cette technique est particulièrement avantageuse pour générer un sol représentatif d'un sol routier en asphalte neuf, en particulier vis-à-vis du coefficient d'adhérence gomme-sol mouillé.

Le relief peut être généré par usinage par enlèvement de matière par un outil coupant, l'outil coupant ayant par exemple une arête coupante.

Le relief peut être généré à l'étape 213 par fabrication additive.

Le relief peut être généré par impression, par exemple par impression 3D. Le relief peut être généré en céramique. Une telle étape 213 peut comprendre une ou plusieurs étapes de dépôt de poudre de céramique et/ou de cuisson. Une telle technique peut permettre de générer le substrat dans son intégralité.

Le relief peut être généré par fusion de surface par laser (« Surface Laser Melting » en terminologie anglo-saxonne), par exemple à partir d'une poudre, par exemple une poudre d'acier, par exemple d'acier inoxydable, par exemple d'acier inoxydable X4CrNiMoN21-9-4. Une telle technique peut permettre de générer le substrat dans son intégralité.

Le relief ainsi généré peut être le relief définitif du substrat 110 du sol. Alternativement, le procédé peut comprendre une modification du relief généré à l'étape 213.

Le procédé, par exemple l'étape 21, peut ainsi comprendre une étape 214 de modulation du relief généré, par exemple de modulation de rugosités, par exemple de modulation d'amplitude, par exemple de micro-reliefs ou de micro-rugosités, du relief généré à l'étape 213, par exemple de sorte à obtenir un deuxième relief du substrat. Le procédé, par exemple l'étape 21, peut ainsi comprendre une étape 214 d'atténuation du relief généré, par exemple d'atténuation de rugosités, par exemple de réduction d'amplitude, par exemple de micro-reliefs ou de micro-rugosités, du relief généré à l'étape 213. Alternativement ou en complément, le procédé, par exemple l'étape 21, peut ainsi comprendre une étape 214 d'amplification du relief généré, par exemple d'amplification de rugosités, par exemple d'augmentation d'amplitude, par exemple de micro-reliefs ou de micro-rugosités, du relief généré à l'étape 213.

Dans ce cas, le relief généré à l'étape 213 est un premier relief modifié à l'étape 214 dans le cadre de la fabrication du sol. Les rugosités modulées sont par exemple des micro-reliefs et/ou des micro-rugosités. Le micro-relief peut être défini par exemple vis-à-vis du macro-relief, le macro-relief étant de plus grande amplitude que le micro-relief. Alternativement ou en complément, le micro-relief peut être défini comme un relief de taille inférieure à 100 µm. Alternativement ou en complément, le micro-relief peut être défini comme le relief de taille inférieure à la précision permise par la technique de génération de relief mise en œuvre à l'étape 213, par exemple par usinage ou ablation, en particulier usinage ou ablation laser, par exemple mesurable avec la précision d'une mesure de profondeur moyenne de texture, par exemple telle que décrite ci-après, mais non maîtrisable par la technique de génération de relief mise en œuvre à l'étape 213. Par micro-rugosités, on entend par exemple un relief dont la longueur d'onde est inférieure à la plus petite rugosité décrite par le relief enregistré à l'étape 2127 et/ou les données de relief obtenues à l'étape 2121, et/ou inférieure à la précision permise par la technique de génération de relief mise en œuvre à l'étape 213, par exemple par usinage ou ablation, en particulier usinage ou ablation laser. Il est ainsi possible de s'approcher des micro-reliefs mesurés sur les sols à reproduire en laboratoire, par exemple les sols routiers.

La modulation peut être réalisée par laser. L'étape 214 peut ainsi comprendre une première étape 2141 de modulation par fusion de surface par laser. Il est ainsi possible de faire refondre la surface du relief, par exemple pour en moduler des rugosités locales. L'étape 214 peut comprendre une deuxième étape 2142 de modulation par laser impulsionnel femto-seconde, par exemple ultérieurement ou alternativement à la première étape 2141. L'étape 214, de préférence les étapes 2141 et/ou 2142, est de préférence réalisée après une étape 212 dans laquelle le relief est généré par fabrication additive, en particulier par impression 3D.

Ainsi, à l'issue de l'étape 21, le relief du substrat 110 est obtenu. Le relief du substrat peut définir le ou correspondre au relief d'une surface d'utilisation 120 telle que décrite ci-après. La partie du substrat 110 où est situé le relief peut former au moins partiellement ou intégralement la surface d'utilisation 120. Alternativement un traitement telle que décrit ci-après, par exemple tel qu'une formation d'un revêtement de surface peut être appliqué sur le relief, par exemple de sorte à former au moins partiellement ou intégralement la surface d'utilisation 120. Dans ce cas, la surface d'utilisation est au moins partiellement disposée au-dessus du relief du substrat 110.

### Traitement de surface

Le procédé comprend une étape 22 de traitement de surface. L'étape 22 comprend une étape 222 d'obtention, par exemple de formation, par exemple de dépôt, d'un revêtement de surface 122, comprenant du nitrure de titane et/ou du nitrure de chrome. Le revêtement de surface peut aussi comprendre du carbone amorphe et/ou carbure de tungstène. Le revêtement de surface peut être un revêtement de surface tel que décrit ci-après.

Il est ainsi possible d'augmenter la dureté en surface, en particulier la dureté au niveau d'une surface d'utilisation, par exemple telle que décrite ci-après. Il est ainsi possible d'offrir une grande résistance au polissage.

L'étape 22 est de préférence mise en œuvre lorsque l'étape 213 de génération du relief a été réalisée par fusion de surface par laser et/ou par usinage laser nano-seconde d'un massif en acier inoxydable.

Le procédé peut être réalisé de sorte que le matériau choisi pour le substrat garantisse un haut niveau de dureté sans revêtement de surface, de préférence lorsque des moyens 312 d'application tels que décrits ci-après comprennent un moteur adapté pour mettre en mouvement relatif l'élément 32.

### Validation

Le procédé peut comprendre une étape 23 de validation du sol obtenu à l'étape 21 et/ou 22. La validation peut être réalisée en conditions de frottement sec et/ou mouillé. La validation peut comprendre une mesure avec un tribomètre, en particulier un tribomètre linaire, et/ou avec une rouleuse. La validation peut comprendre la comparaison de la mesure avec une courbe de frottement.

### Sol

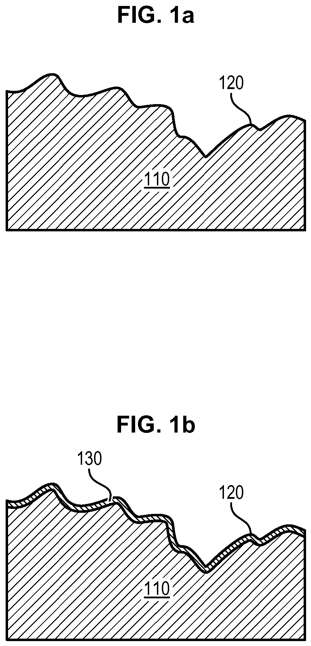

En référence aux figures 1a et 1b, il est décrit un sol. Le sol est par exemple un sol de test, par exemple de test d'un élément, par exemple un sol de test de pneu et/ou de partie de pneu et/ou de gomme.

Le sol comprend un substrat 110. Le substrat 110 a un module d'Young compris entre 100 et 1000 GPa, de préférence entre 100 et 500 GPa. Un tel module d'Young dépasse largement celui d'une gomme, qui est au maximum de 3 à 10 GPa, par exemple en compression dans le domaine vitreux. Un tel module d'Young dépasse également celui de l'aluminium. Ainsi, même en cours d'utilisation, la gomme reste largement plus déformable que le substrat qui en comparaison ne se déforme pas.

Le sol comprend une surface d'utilisation 120. La surface d'utilisation est un revêtement de surface tel que décrit ci-après. Le sol présente au niveau de la surface d'utilisation 120 une dureté Vickers comprise entre 1300 et 10000 kgf/mm², de préférence entre 1500 et 3500 kgf/mm². La surface d'utilisation permet ainsi au sol d'atteindre des duretés importantes.

« kgf » signifie kilogramme-force, et 1 kgf = 9,806 65 N.

Il est ainsi possible d'obtenir un sol qui a les caractéristiques souhaitées, par exemple celles d'un sol routier, et qui peut être testé de manière répétée tout en conservant ses caractéristiques de frottement malgré un tel usage répété, ce qui permet d'assurer la pertinence des tests effectués. Un tel sol est particulièrement efficace pour tester des caractéristiques d'adhérence, par exemple sur sol sec et/ou sol mouillé.

Le sol est par exemple obtenu par le procédé de fabrication décrit ci-avant.

En outre, un tel sol peut également être efficace pour tester des caractéristiques d'efforts pneu/sol, par exemple au moyen d'un dispositif de test tel que décrit ci-après, pour laquelle les sols connus sont soit incapables d'avoir une topographie représentative d'un sol routier, soit présentent une usure trop importante nécessitant des changements de sol trop fréquents. Contrairement aux sols connus, il est ainsi possible d'éviter à la fois des problèmes de coûts et de reproductibilité.

En effet, les sols de l'art antérieurs utilisés en laboratoires ne reproduisent pas les caractéristiques d'un sol routier et/ou s'usent de manière prématurée, ce qui nuit fortement à la reproductibilité des tests utilisant les sols de l'art antérieur.

Un des mécanismes de l'adhérence du pneu sur sol mouillé provient de la déformation de la gomme qui glisse sur le sol. De par la viscoélasticité du matériau du pneu, cette déformation entraîne une dissipation d'énergie qui se traduit directement en termes d'efforts de frottement. La connaissance et la maîtrise de la rugosité du sol est donc critique pour assurer la pertinence de la mesure de frottement en laboratoire par rapport aux mesures d'adhérence sur pneu complet sur piste de freinage.

Les sols routiers sont généralement constitués de liant bitumineux et de granulats de roches concassées dont la nature pétrographique et la taille sont variables d'un sol à l'autre. En termes de rugosités, les sols routiers se distinguent par leur caractère multi-échelle (taille caractéristique de rugosité allant de 1 cm à 1 µm voire moins) et leur structure quasi fractale.

Une des difficultés surmontées par le sol décrit ici permettant d'améliorer la pertinence de la mesure laboratoire est de garantir que la rugosité du sol sur laquelle la gomme frotte lors d'un test puisse bien représenter les caractéristiques d'un sol routier. A ce sujet, il est ici possible de définir le terme de longueur cinématique comme étant la longueur cumulée de gomme qui glisse sur un point du sol. Sur un contact réel entre la gomme d'un pneu et un sol routier d'une piste de freinage utilisée intensivement, la longueur cinématique vue par un point du sol pendant une utilisation de deux ans de la piste de freinage est de l'ordre d'une dizaine de mètres. A contrario, au laboratoire, la caractérisation de nombreux points de fonctionnement de la gomme (pression, vitesse, température) combinée au fait que le frottement se fait toujours au même endroit conduit à des longueurs cinématiques vues par un point du sol bien supérieures, de plusieurs ordres de grandeur (environ 10 km par granulat en un an d'utilisation labo). Il en résulte une manifestation des phénomènes de polissage/érosion de la roche nettement plus rapide au laboratoire que sur les pistes externes. Ceci se manifeste par des niveaux d'adhérence au laboratoire systématiquement plus faibles que sur les pistes externes et qui évoluent fortement au cours de la vie du sol.

L'état de l'art actuel montre qu'aucune roche naturelle ne permet de limiter le mécanisme de polissage et de maintenir des niveaux d'adhérence comparables à ceux des pistes externes.

Le sol décrit ici, et qui peut être obtenu au moyen du procédé décrit ci-avant, de par le module élastique du substrat et la dureté de sa surface d'utilisation et/ou le matériau du revêtement de surface, permet de pallier ces inconvénients

Le substrat 110 peut comprendre ou être formé d'un massif, par exemple d'un massif métallique. Le substrat 110 peut comprendre de l'acier, par exemple de l'acier inoxydable, par exemple de l'acier inoxydable X4CrNiMoN21-9-4 et/ou de l'acier inoxydable austénitique, par exemple de l'acier inoxydable X2CrNi18-9, et/ou du carbure, par exemple du carbure de tungstène, et/ou de la céramique, par exemple de la céramique zircone, par exemple de la zircone Zr700. Le substrat 110 peut comprendre ou être formé et/ou constitué d'un massif en acier, par exemple en acier inoxydable, par exemple en acier inoxydable X4CrNiMoN21-9-4 et/ou et/ou en acier inoxydable austénitique, par exemple en acier inoxydable X2CrNi18-9 en carbure de tungstène et/ou en céramique, par exemple en céramique zircone, par exemple en zircone Zr700.

Le sol peut présenter au niveau de la surface d'utilisation 120 une dureté Vickers comprise entre 1300 et 10000 kgf/mm², de préférence entre 1500 et 3500 kgf/mm².

Le sol comprend un revêtement de surface 130. Il est ainsi possible d'augmenter la dureté en surface, en particulier la dureté au niveau de la surface d'utilisation. Il est ainsi possible d'offrir une grande résistance au polissage.

Le revêtement de surface 130 peut avoir une épaisseur comprise entre 0,1 et 100 µm, de préférence entre 2 et 5 µm, de préférence 3 µm. L'épaisseur du revêtement peut ainsi être choisie pour ne pas modifier l'amplitude des rugosités, et donc ne pas modifier la réponse en frottement du substrat.

Le revêtement de surface 130 peut comprendre du carbone amorphe (« Diamond-Like Carbon » en terminologie anglo-saxonne) et, selon l'invention, comprend du nitrure de titane, et/ou du nitrure de chrome. Le revêtement peut ainsi comprendre du carbure de tungstène.

Le revêtement de surface 130 comprend la surface d'utilisation 120.

La surface d'utilisation 120 peut former une surface de test. La surface d'utilisation 120 peut être adaptée de sorte à ce que l'élément à tester soit appliqué dessus.

La surface d'utilisation 120 peut avoir un relief tel que décrit ci-avant.

La profondeur moyenne de texture au niveau de la surface d'utilisation 120 est comprise entre 0,3 et 1,7 mm, par exemple d'1 mm. La profondeur moyenne de texture est établie en accord avec le Règlement (UE) N° 228/2011 de la Commission Européenne du 7 mars 2011, Annexe V 3.1(4).

Le coefficient d'adhérence entre une gomme et le sol au niveau de la surface d'utilisation 120 peut être compris entre 0,5 et 2. Un tel coefficient d'adhérence est par exemple mesuré par un test de frottement linéaire stationnaire en conditions mouillées, par exemple dans des conditions ou la surface d'utilisation 120 et/ou le sol est baigné dans de l'eau, pour une longueur glissée, ou une longueur cinématique, cumulée de 100 mm, à 4 bars, pour une vitesse de 1 m/s, à température d'eau de 25°C. La longueur glissée, ou longueur cinématique, cumulée est la quantité de déplacement relatif de deux surfaces, par exemple celles de la gomme et du sol, cumulée dans le repère du sol.

La gomme pour l'établissement du coefficient d'adhérence peut être une gomme ayant une composition représentative des gommes utilisées en mélange bande de roulement pneu.

La gomme pour l'établissement du coefficient d'adhérence peut être caractérisée par un facteur de perte tan(δ) et un module complexe G*.

La propriété dynamique max(tan(δ)) est par exemple mesurée sur un viscoanalyseur 5 (Metravib V A4000), selon la norme ASTM D 5992 - 96. La mesure comprend l'enregistrement d'une réponse d'un échantillon de composition vulcanisée (par exemple une éprouvette cylindrique de 4 mm d'épaisseur et de 400 mm² de section), soumis à une sollicitation sinusoïdale en cisaillement simple alterné, à la fréquence de 10 Hz, dans des conditions normales de température (par exemple 23°C) selon la norme ASTM D 1349 - 99. La réponse enregistrée est ensuite soumise à un balayage en amplitude de déformation crête à crête de 0,1 à 50% (cycle aller), puis de 50% à 1 % (cycle retour). Le résultat exploité est le facteur de perte tan(δ). Pour le cycle retour, on indique la valeur maximale de tan(δ) observée max(tan(δ)).

Le module complexe est par exemple mesuré de la manière suivante. La mesure comprend l'enregistrement d'une réponse d'un échantillon de composition vulcanisée soumis à une sollicitation sinusoïdale en cisaillement simple alterné lors d'un balayage en température, soumis à une sollicitation sinusoïdale à contrainte imposée de 0,7 MPa et à une fréquence de 10 Hz, la température allant de -60°C à 100°C, à raison une vitesse de 1,5°C par minute. La température du maximum de tan(δ) de la gomme de la réponse enregistrée, notée « Tg (°C) max(tan(δ)) ». Un autre résultat exploité est le module complexe de cisaillement dynamique (G*), par exemple à 60°C. Pour plus de lisibilité les résultats de G* seront indiqués en base 100, la valeur 100 étant attribuée au témoin. Un résultat inférieur à 100 indiquant une diminution de la valeur concernée, et inversement, un résultat supérieur à 100, indiquera une augmentation de la valeur concernée.

La surface d'utilisation, par exemple le sol, peut avoir une forme comprenant au moins une portion courbe, par exemple un arc de cercle. La surface d'utilisation, par exemple le sol, peut avoir une forme comprenant au moins une courbe fermée, par exemple un cercle. Le sol, peut ainsi former un volant.

La surface d'utilisation, par exemple le sol, peut avoir une forme comprenant au moins une portion formant une bande, par exemple une forme de bande fermée sur elle-même, par exemple une forme de chenille. Une telle surface d'utilisation ou un tel sol peut être utilisé au moyen d'une rouleuse de type « flat track » comme décrit ci-après.

Le sol peut former une éprouvette. Le sol peut avoir des dimensions adaptées pour former une éprouvette adaptée pour être utilisée par un dispositif de test tel que décrit ci-après.

### Dispositif

En référence à la figure 3, il est décrit un dispositif 31 de test d'un élément 32. Le dispositif 31 comprend un sol 1 tel que décrit ci-avant. Le dispositif 31 comprend des moyens 312 d'application de l'élément 32 sur le sol 1, par exemple de l'élément 32 sur la surface d'utilisation 120, et/ou de mise en mouvement relatif de l'élément 32 et du sol 1.

Les moyens 312 d'application peuvent comprendre un applicateur adapté pour appliquer l'élément 32 sur le sol 1. L'applicateur peut comprendre un bras.

Le mouvement peut être un mouvement rectiligne ou de rotation. Le mouvement peut être un mouvement du sol, l'élément 32 restant fixe.

Les moyens 312 d'application peuvent comprendre un moteur et/ou un arbre et/ou un bras adapté(s) pour mettre en mouvement relatif l'élément 32 et le sol.

L'élément 32 peut être ou comprendre un pneu et/ou une partie de pneu et/ou une gomme. L'élément 32 peut être ou comprendre au moins une portion de roue, par exemple une roue.

Les moyens 312 d'application peuvent être adaptés pour réguler une vitesse de l'élément 31 par rapport au sol, par exemple une vitesse de déplacement linéaire ou une vitesse de déplacement annulaire, par exemple une vitesse de rotation. La vitesse peut être comprise entre 0,5 et 1,5 m/s, par exemple entre 0,9 et 1,2 m/s.

Le dispositif peut comprendre des moyens de contrôle de température peuvent contrôler la température ambiante et/ou la température initiale de l'élément 31. Le dispositif et/ou un ensemble ou un système comprenant le dispositif peut comprendre les moyens de contrôle de température. Les moyens de contrôle de température peuvent comprendre un dispositif de contrôle de température, par exemple un thermostat, par exemple un chauffage, par exemple une résistance, et/ou un dispositif de refroidissement. Le dispositif est par exemple configuré pour contrôler la température de sorte à la maintenir entre 20 et 30°C, par exemple à 25°C.

Le dispositif peut comprendre des moyens de mesure d'au moins une grandeur physique, par exemple une ou plusieurs grandeurs physiques. Les moyens de mesure peuvent comprendre un capteur de mesure d'au moins une grandeur physique, par exemple un effort et/ou un moment.

Le dispositif peut comprendre des moyens de traitement de données, par exemple par une unité de traitement de données, par exemple par un processeur. Les moyens de traitement de données sont par exemple les mêmes que ceux déjà décrits dans le cadre du procédé de fabrication et/ou les mêmes que ceux décrits dans le cadre du procédé d'utilisation ci-après.

Le dispositif 31 peut être un tribomètre, par exemple un tribomètre linéaire ou un tribomètre ayant une configuration de rotation ou tribomètre rotatif.

Les moyens 312 d'application peuvent être adaptés pour appliquer un effort normal au sol, par exemple normal à un plan médian, par exemple normal à un plan médian correspondant à la surface d'utilisation, par exemple de sorte à contrôler une pression moyenne de contact de l'élément 32 sur le sol.

Les moyens 312 d'application sont par exemple adaptés pour déplacer l'élément 31 de manière tangentielle par rapport au sol, par exemple à la surface d'utilisation. Lorsque le tribomètre est linaire, le déplacement peut être une translation rectiligne. Alternativement, lorsque le tribomètre est rotatif, le déplacement peut suivre une trajectoire annulaire, par exemple être une rotation.

Les moyens de mesure peuvent être adaptés pour mesurer un effort, en particulier un effort tangentiel. La ou les grandeur(s) physique(s), par exemple l'effort, peu(ven)t être mesurée(s) au niveau de l'interface entre l'élément 32 et le sol.

Le dispositif, par exemple les moyens de traitement de données, peut être adapté pour déterminer en sortie un coefficient de frottement adimensionné en normant l'effort tangentiel par l'effort normal.

Le dispositif 31 peut être une rouleuse. La rouleuse peut être un dispositif adapté pour faire rouler l'élément 32. La rouleuse peut être adaptée pour piloter l'orientation de l'élément 32, par exemple l'orientation du plan médian de l'élément 32, par exemple l'orientation du plan médian de la roue ou de la partie de roue de l'élément 32 ou formant l'élément 32, de sorte à appliquer à l'élément 32 des sollicitations. Alternativement ou en complément, la rouleuse peut être adaptée pour piloter la vitesse de l'élément 32 de sorte à appliquer à l'élément 32 des sollicitations, Alternativement ou en complément, la rouleuse peut être adaptée pour piloter le couple appliqué à l'élément 32, par exemple au centre de l'élément 32, par exemple au centre de la roue ou de la partie de roue de l'élément 32.

Les moyens 312 peuvent être adaptés pour appliquer un effort de l'élément 32 sur le sol, par exemple un effort d'intensité croissante dans le temps, par exemple jusqu'à atteindre une consigne de force.

Les moyens de mesure peuvent être adaptés pour mesurer un effort et/ou un moment. L'au moins une grandeur physique, par exemple l'effort, peut être mesurée au centre de l'élément, par exemple au centre de la roue de l'élément 32.

Le dispositif, par exemple les moyens de traitement de données, peut être adapté pour déterminer l'adhérence de l'élément par rapport au sol, par exemple à partir de l'effort et/ou du moment mesuré(s) par les moyens de mesure.

La rouleuse peut être une rouleuse de type « flat-track » (« piste plane » en terminologie anglo-saxonne). Pour une telle rouleuse, la surface d'utilisation, par exemple le sol, peut avoir une forme comprenant au moins une portion formant une bande comme décrit ci-avant.

### Procédé d'utilisation

En référence à la figure 4, il est décrit un procédé de test de l'élément. L'élément peut être testé au moyen du dispositif 31.

Le procédé peut comprendre une étape 41 d'application de l'élément 32 sur le sol 1.

Le procédé peut comprendre une étape 42 de mesure du comportement de l'élément 32 sur le sol 1, en particulier sur la surface d'utilisation 110.

### Rouleuse

Le dispositif est ou comprend par exemple la rouleuse telle que décrite ci-avant.

L'étape 41 peut être mise en œuvre sans rotation relative et/ou absolue de l'élément et/ou du sol. L'étape 41 peut alors comprendre l'application d'un effort de l'élément 32 sur le sol, par exemple un effort croissant en intensité dans le temps, par exemple jusqu'à atteindre une consigne de force.

Alternativement, ou en complément dans une autre étape 41 d'application de l'élément sur le sol, l'étape 41 peut comprendre la mise en rotation du sol par rapport à l'élément, par exemple de sorte que le sol entraîne l'élément en rotation de sorte que sol et élément sont chacun en rotation dans le référentiel du laboratoire. La rotation de l'élément 32 peut être régulée, en couple et/ou en taux de glissement, par exemple en fonction d'une consigne d'asservissement. La consigne d'asservissement peut comprendre une consigne de couple nul ou non nul à une valeur prédéterminée. La consigne d'asservissement peut comprendre une consigne de taux de glissement nul ou non nul à une valeur prédéterminée.

Alternativement, ou en complément dans une autre étape 41 d'application de l'élément sur le sol, une animation peut être appliquée à l'élément 32, par exemple une variation d'angle de dérive de l'élément par rapport au sol et/ou une variation d'angle de carrossage de l'élément par rapport au sol et/ou une variation de charge, et/ou une variation de taux de glissement.

L'étape 42 peut comprendre la mesure d'un ou plusieurs effort(s) et/ou d'un ou plusieurs moment(s), par exemple au centre de la roue lorsque l'élément 32 comprend une roue comme décrit ci-avant.

Le procédé peut comprendre l'obtention de l'adhérence de l'élément par rapport au sol, par exemple par les moyens de traitement, par exemple à partir des mesures d'effort(s) et de moment(s).

### Tribomètre

Le dispositif est ou comprend par exemple le tribomètre tel que décrit ci-avant.

L'étape 41 peut comprendre l'application d'un effort normal au sol, par exemple normal à un plan médian, par exemple normal à un plan médian correspondant à la surface d'utilisation, par exemple de sorte à contrôler une pression moyenne de contact de l'élément 32 sur le sol.

L'étape 41 peut comprendre l'application de l'élément 31 de manière tangentielle par rapport au sol, par exemple à la surface d'utilisation. Lorsque le tribomètre est linaire, le déplacement peut être une translation rectiligne. Alternativement, le déplacement peut suivre une trajectoire annulaire, par exemple être une rotation.

L'étape 41 peut comprendre le contrôle de la température ambiante et/ou la température initiale de l'élément 31. Le dispositif et/ou un ensemble ou un système comprenant le dispositif peut comprendre les moyens de contrôle de température.

L'étape 42 peut comprendre la mesure d'un effort, en particulier un effort tangentiel. L'au moins une grandeur physique, par exemple l'effort, peut être mesurée au niveau de l'interface entre l'élément 32 et le sol.

Le procédé peut comprendre la détermination en sortie d'un coefficient de frottement adimensionné en normant l'effort tangentiel par l'effort normal, par exemple par les moyens de traitement.

### Exemple détaillé

En référence à la figure 6, il est décrit un exemple détaillé mettant en œuvre un sol de test qui ne fait pas partie de l'invention revendiquée.

Le substrat du sol est métallique, en acier inoxydable X4CrNiMoN21-9-4, dont le relief a été généré par usinage laser impulsionnel à partir d'un massif, par exemple par usinage laser impulsionnel nano-seconde.

Le revêtement de surface du sol est constitué de carbone amorphe d'environ 3 µm.

Le relief reproduit correspond à un sol de référence.

Pour le sol de test, seule la couronne du sol de référence comprise entre un rayon de 30 mm et un rayon 46 mm est texturée de sorte à présenter le relief.

La surface du sol de référence a été préalablement convertie en solide et enregistrée pour permettre la fabrication du sol de test.

L'évolution du sol de test avec les frottements est testée par un tribomètre. La figure 6 représente l'évolution du coefficient de frottement normalisé maximum en fonction de la longueur cinématique en m en échelle logarithmique, à une vitesse de 1,2 m/s, une pression de 4 bars, et une température ambiante de 25°C.

L'observation du sol de test en frottement est faite à différents stades de polissage, comptabilisés en longueur cinématique (1, 25, 250, 1000, 2500 m). Le rodage est fait à un point de fonctionnement (4 bars, 1,2 m/s, 25°C) unique.

Le sol de test offre un niveau de coefficient de frottement normalisé (µ) très élevé, même à des longueurs glissées ou cinématiques cumulées très élevées.

Par ailleurs, pendant la mesure le sol de test évolue peu visuellement.

La présence du revêtement en carbone amorphe ne modifie pas notablement les reliefs, et améliore la performance résistance au polissage.

Les courbes 601 et 602 représentent l'évolution constatée sur sol de rodage en grès. La courbe 603 du sol de test est rigoureusement insensible au polissage

## Revendications

1. Sol comprenant un substrat (110) ayant un module d'Young compris entre 100 et 1000 GPa, comprenant un revêtement de surface formant une surface d'utilisation, dans lequel le revêtement de surface comprend du nitrure de titane, et/ou du nitrure de chrome, la surface d'utilisation présentant un relief avec une profondeur moyenne de texture comprise entre 0,3 et 1,7 mm.

2. Sol selon la revendication 1 présentant au niveau d'une surface d'utilisation (120) une dureté Vickers comprise entre 1300 et 10000 kgf/mm², le revêtement de surface comprenant en outre du carbone amorphe et/ou du carbure de tungstène.

3. Sol selon l'une quelconque des revendications 1 à 2, dans lequel le revêtement de surface a une épaisseur comprise entre 2 et 5 µm.

4. Sol selon l'une quelconque des revendications 1 à 3, dans lequel le substrat a un module d'Young compris entre 100 et 500 GPa, et/ou dans lequel le sol présente au niveau de la surface d'utilisation une dureté Vickers comprise entre 1500 et 3500 kgf/mm², et/ou dans lequel le substrat comprend de l'acier inoxydable, et/ou du carbure de tungstène, et/ou de la céramique.

5. Sol selon l'une quelconque des revendications précédentes, dans lequel le coefficient d'adhérence entre une gomme et le sol au niveau de la surface d'utilisation du sol est compris entre 0,5 et 2, la gomme étant une gomme ayant une composition représentative des gommes utilisées en mélange bande de roulement pneu.

6. Dispositif de test d'un élément, comprenant :
- un sol selon l'une quelconque des revendications précédentes, et des moyens (312) d'application de l'élément sur le sol et/ou de mise en mouvement relatif de l'élément et du sol.

7. Dispositif de test selon la revendication 6, dans lequel le dispositif est une rouleuse, ou dans lequel le dispositif est un tribomètre et dans lequel l'élément comprend une gomme, le dispositif étant configuré pour que le coefficient d'adhérence entre la gomme et le sol au niveau de la surface d'utilisation du sol est compris entre 0,5 et 2.

8. Procédé de fabrication d'un sol selon l'une quelconque des revendications 1 à 5, le procédé comprenant une étape (21) d'obtention du substrat et une étape de traitement de surface comprenant une étape de formation du revêtement de surface formant la surface d'utilisation.

9. Procédé selon la revendication 8, dans lequel l'étape d'obtention du substrat comprend une étape (212) de détermination d'un relief à reproduire, l'étape (212) de détermination d'un relief à reproduire comprenant une étape (2122) d'obtention d'un sol de référence, par exemple par carottage de route, et une étape (2123) de mesure d'un relief du sol de référence.

10. Procédé selon l'une quelconque des revendications 8 à 9, dans lequel l'étape d'obtention du substrat comprend une étape (213) de génération d'un relief du substrat par fabrication additive en céramique, ou dans lequel l'étape d'obtention du substrat comprend une étape (213) de génération d'un relief par usinage, par exemple par usinage laser.

11. Procédé selon la revendication 10, dans lequel l'usinage laser est un usinage laser d'un massif comprenant du carbure de tungstène, ou dans lequel l'usinage laser est un usinage laser d'un massif comprenant de l'acier inoxydable.

12. Procédé selon l'une quelconque des revendications 10 à 11, dans lequel l'étape d'obtention du substrat comprend une étape (213) de génération du relief par fusion de surface par laser à partir d'une poudre d'acier inoxydable.

13. Procédé selon l'une quelconque des revendications 8 à 12, dans lequel l'étape d'obtention du substrat comprend en outre une étape (214) de modulation du relief généré.

14. Procédé de test d'un élément au moyen du dispositif de l'une quelconque des revendications 6 à 7, comprenant l'application de l'élément sur le sol et/ou la mise en mouvement relatif de l'élément par rapport au sol.

## Patentansprüche

1. Boden, umfassend ein Substrat (110) mit einem Elastizitätsmodul zwischen 100 und 1000 GPa, umfassend einen Oberflächenbelag, der eine Nutzoberfläche bildet, wobei der Oberflächenbelag Titannitrid und/oder Chromnitrid umfasst, wobei die Nutzoberfläche ein Relief mit einer mittleren Texturtiefe zwischen 0,3 und 1,7 mm aufweist.

2. Boden nach Anspruch 1, der an einer Nutzoberfläche (120) eine Vickers-Härte zwischen 1300 und 10000 kgf/mm² aufweist, wobei der Oberflächenbelag ferner amorphen Kohlenstoff und/oder Wolframcarbid umfasst.

3. Boden nach einem der Ansprüche 1 bis 2, wobei der Oberflächenbelag eine Dicke zwischen 2 und 5 µm hat.

4. Boden nach einem der Ansprüche 1 bis 3, wobei das Substrat einen Elastizitätsmodul zwischen 100 und 500 GPa hat und/oder wobei der Boden an der Nutzoberfläche eine Vickers-Härte zwischen 1500 und 3500 kgf/mm² aufweist und/oder wobei das Substrat Edelstahl und/oder Wolframcarbid und/oder Keramik umfasst.

5. Boden nach einem der vorhergehenden Ansprüche, wobei der Haftreibungskoeffizient zwischen einem Gummi und dem Boden an der Nutzoberfläche des Bodens zwischen 0,5 und 2 beträgt, wobei das Gummi ein Gummi mit einer Zusammensetzung ist, die für in einer Reifenlaufstreifenmischung verwendete Gummis repräsentativ ist.

6. Testvorrichtung zum Testen eines Elements, umfassend:
- einen Boden nach einem der vorhergehenden Ansprüche und Mittel (312) zum Anstellen des Elements an den Boden und/oder zum relativen Bewegen des Elements und des Bodens.

7. Testvorrichtung nach Anspruch 6, wobei die Vorrichtung ein Reifenprüfstand ist und/oder wobei die Vorrichtung ein Tribometer ist und wobei das Element ein Gummi umfasst, wobei die Vorrichtung dazu ausgestaltet ist, dass der Haftreibungskoeffizient zwischen dem Gummi und dem Boden an der Nutzoberfläche des Bodens zwischen 0,5 und 2 beträgt.

8. Verfahren zur Herstellung eines Bodens nach einem der Ansprüche 1 bis 5, wobei das Verfahren einen Schritt (21) des Erhaltens des Substrats und einen Schritt der Oberflächenbehandlung umfasst, der einen Schritt des Bildens des Oberflächenbelags umfasst, der die Nutzoberfläche bildet.

9. Verfahren nach Anspruch 8, wobei der Schritt des Erhaltens des Substrats einen Schritt (212) des Bestimmens eines zu reproduzierenden Reliefs umfasst, wobei der Schritt (212) des Bestimmens eines zu reproduzierenden Reliefs einen Schritt (2122) des Erhaltens eines Referenzbodens, zum Beispiel durch Kernbohren einer Fahrbahn, und einen Schritt (2123) des Messens eines Reliefs des Referenzbodens umfasst.

10. Verfahren nach einem der Ansprüche 8 bis 9, wobei der Schritt des Erhaltens des Substrats einen Schritt (213) des Erzeugens eines Reliefs des Substrats durch generative Fertigung aus Keramik umfasst oder wobei der Schritt des Erhaltens des Substrats einen Schritt (213) des Erzeugens eines Reliefs durch Bearbeitung, zum Beispiel durch Laserbearbeitung, umfasst.

11. Verfahren nach Anspruch 10, wobei die Laserbearbeitung eine Laserbearbeitung eines Massivteils ist, das Wolframcarbid umfasst, oder wobei die Laserbearbeitung eine Laserbearbeitung eines Massivteils ist, das Edelstahl umfasst.

12. Verfahren nach einem der Ansprüche 10 bis 11, wobei der Schritt des Erhaltens des Substrats einen Schritt (213) des Erzeugens des Reliefs durch Oberflächenschmelzen durch Laser aus einem Edelstahlpulver umfasst.

13. Verfahren nach einem der Ansprüche 8 bis 12, wobei der Schritt des Erhaltens des Substrats ferner einen Schritt (214) des Modulierens des erzeugten Reliefs umfasst.

14. Verfahren zum Testen eines Elements mittels der Vorrichtung nach einem der Ansprüche 6 bis 7, umfassend das Anstellen des Elements an den Boden und/oder das relative Bewegen des Elements in Bezug auf den Boden.

## Claims

1. Ground surface comprising a substrate (110) having a Young's modulus of between 100 and 1000 GPa, comprising a surface coating forming a working surface, wherein the surface coating contains titanium nitride and/or chromium nitride, the working surface having a relief, the mean texture depth of which is comprised between 0.3 and 1.7 mm.

2. Ground surface according to Claim 1 having at a working surface (120) a Vickers hardness of between 1300 and 10000 kgf/mm², the surface coating further containing amorphous carbon and/or tungsten carbide.

3. Ground surface according to either one of Claims 1 to 2, wherein the surface coating has a thickness of between 2 and 5 µm.

4. Ground surface according to any one of Claims 1 to 3, wherein the substrate has a Young's modulus of between 100 and 500 GPa, and/or wherein the ground surface has, on the working surface, a Vickers hardness of between 1500 and 3500 kgf/mm², and/or wherein the substrate contains stainless steel and/or tungsten carbide and/or ceramic.

5. Ground surface according to any one of the preceding claims, wherein the coefficient of grip between a rubber and the ground surface at the working surface of the ground surface is between 0.5 and 2, the rubber being a rubber having a composition representative of the rubbers used in a tyre tread compound.

6. Test device for testing a component, comprising:
- a ground surface according to any one of the preceding claims, and means (312) for pressing the component against the ground surface and/or for creating relative movement between the component and the ground surface.

7. Test device according to Claim 6, wherein the device is a rolling device, or wherein the device is a tribotester and wherein the component comprises a rubber, the device being configured such that the coefficient of grip between the rubber and the ground surface at the working surface of the ground surface is between 0.5 and 2.

8. Method for manufacturing a ground surface according to any one of Claims 1 to 5, the method comprising a step (21) of obtaining the substrate and a surface treatment step comprising a step of forming the surface coating that forms the working surface.

9. Method according to Claim 8, wherein the step of obtaining the substrate comprises a step (212) of determining a relief to be reproduced, the step (212) of determining a relief to be reproduced comprising a step (2122) of obtaining a reference ground surface, for example by taking a core sample of a road, and a step (2123) of measuring a relief of the reference ground surface.

10. Method according to any one of Claims 8 to 9, wherein the step of obtaining the substrate comprises a step (213) of generating a relief on the substrate by additive manufacturing using a ceramic, or wherein the step of obtaining the substrate comprises a step (213) of generating a relief by machining, for example by laser machining.

11. Method according to Claim 10, wherein the laser machining is laser machining of a solid lump containing tungsten carbide, or wherein the laser machining is laser machining of a solid lump containing stainless steel.

12. Method according to any one of Claims 10 to 11, wherein the step of obtaining the substrate comprises a step (213) of generating the relief by surface laser melting using a stainless steel powder.

13. Method according to any one of Claims 8 to 12, wherein the step of obtaining the substrate further comprises a step (214) of modulating the relief generated.

14. Test method for testing a component by means of the device of any one of Claims 6 to 7, involving pressing the component onto the ground surface and/or creating relative movement between the component and the ground surface.
